# EUROPEAN PATENT SPECIFICATION

(11) **EP 2 686 546 B1**
(45) Date of publication and mention of the grant of the patent: **20.01.2016**
(21) Application number: 11714514.4
(22) Date of filing: 05.04.2011
(51) Int. Cl.: F03D 1/06, B32B 27/00, F03D 11/00

(54) **ARRANGEMENT TO IMPROVE THE SURFACE OF A WIND TURBINE BLADE**
ANORDNUNG ZUR VERBESSERUNG DER OBERFLÄCHE EINER WINDTURBINENSCHAUFEL
DISPOSITIF POUR AMÉLIORER LA SURFACE D'UNE PALE D'ÉOLIENNE

(30) Priority: 11.03.2011 EP 11157898
(43) Date of publication of application: 22.01.2014
(73) Proprietor: Siemens Aktiengesellschaft, 80333 München (DE)
(72) Inventor: LIND, Soeren Oemann, DK-4700 Næstved (DK); STEGE, Jason, DK-7330 Brande (DK)
(86) International application number: PCT/EP2011/055280
(87) International publication number: WO 2012/123034

(56) References cited:
- WO-A1-98/53200
- WO-A1-2004/012937
- WO-A1-2008/157013
- WO-A1-2011/018695
- DE-U1-202009 006 966
- US-A1- 2008 181 775
- US-A1- 2009 220 726

## Description

The invention relates to a method and an arrangement to improve the surface of a wind turbine blade.

Offshore wind turbines and wind turbines, which are located at sites with a cold climate, need to be protected against influences from the ambient, like ice for example, and even need to be protected against erosion.

Especially the blades of the wind turbine need to be protected against icing. Otherwise the aerodynamic characteristics of the blades are reduced significantly and the output-power of the wind turbine is reduced.

It is known to heat the blade(s) for de-icing. This can be done by an electrical power source and by connected heating-wires, which are integrated into the blade-surface for example. Even hot or warm air may be used for de-icing. The air is brought into cavities of the blade for example and may be generated by help of wind-turbine components.

Especially the leading edge of the blade is prone to erosion, thus the surface of the blade is harmed step by step over the live-time of the wind turbine. A harmed blade surface allows ice to grow and expand there significantly.

The erosion of the blade surface is mainly caused by particles of dirt, which are blown by the wind with high velocity and which thus attack the turning blades significantly.

The erosion of the blade surface is also caused by bird-strikes, bat-strikes, frost, salt (at offshore sites), rain, insects and even by long-term loads acting on the blade. Long-term loads may lead to hair-line cracks, which are points of attack for salt and/or ice, etc.

Document US 2008/0181775 A1 discloses an improved blade in view to erosion, lightning and icing. The leading edge of the blade includes a frontal surface and an erosion shield. The shield is positioned externally at the frontal surface of the blade. A heat generating element is positioned between the shield and the frontal surface for its fixation during the blade-manufacturing-process. This solution is complicated and is even expensive.

Documents WO2011/018695 A1, DE202009006966 U1 and WO2008/157013 A1 disclose wind turbine blades with improved surface according to the prior art.

Documents US2009/220726 A1 and WO 2004/012937 improved platic tapes according to the prior art.

It is therefore the aim of the present invention, to provide an arrangement to improve the surface of a wind turbine blade, preferably to avoid erosion and icing there.

This aim is reached by the features of the independent claim. Preferred configurations of the invention are object of the dependent claims.

According to the invention a special designed plastic tape is placed at specific locations of the blade-surface.

The specific locations are known to be difficult in view to erosion and/or icing and thus need to be improved to withstand ambient influences in a better way.

In a preferred configuration the plastic tape is placed along the leading edge of the blade as this area is known to be challenged by erosion and/or icing.

The plastic tape invented comprises carbon fibers, which are used for reinforcement purposes of the tape.

The carbon fibers are used as carrier for further components of the plastic tape. Thus the carrier forms a first layer within a tape-sandwich structure.

The carbon fibers are part of an electrical de-icing-system. Electrical current or electrical power is guided and sent through the carbon fibers. Thus the carbon fibers of the first layer are used as transmission lines.

The carbon fibers and thus the first layer become warm, thus ice is melted which is close to the plastic tape.

In a preferred configuration the first layer or carrier layer comprises a thermoplastic material additionally. The thermoplastic material may be made of PTFE, PVDF, PP or PET. The thermoplastic material may be used to connect and/or to guide and/or to support the carbon fibers.

The plastic tape comprises on a first side a second layer, which is connected with the carrier-layer or first layer.

The second layer comprises a so called "Polyvinylidene Fluoride, PVDF" preferable.

The "Polyvinylidene Fluoride, PVDF" are highly non-reactive and pure thermoplastic fluoropolymer. Thus even other pure thermoplastic fluoropolymer might be used as second layer.

In a preferred configuration the plastic tape comprises a third layer on a second side of the tape. The third layer is connected with the carrier-layer or first layer and is arranged opposite to the second layer.

Thus the second side of the tape is opposite to the first side of the tape.

The second side of the plastic tape is prepared to be connected with the blade.

This connection may be established by help of the additional third layer. The third layer is preferably connected with the blade by an adhesive applied. Due to the polyester or polyurethane the third layer is best suited for the adhesive-based connection.

It is also possible that the first layer or carrier layer is prepared to be connected with the blade surface by an adhesive applied. In this case the sandwich structure shows only two layers: the carrier-layer and the second layer, while the second layer faces to the ambient as blade-surface later.

In a preferred configuration the adhesive is a liquid adhesive.

As described above the plastic tape shows a sandwich structure.

The plastic tape is preferably made of three layers:
- the PVDF-layer (or second layer), which forms a top layer and is aligned to the ambient, acting as blade-surface,
- the carrier-layer (or first layer), which comprises the carbon fibers, and
- a bottom layer (or third layer), which comprises polyester or polyurethane.

The plastic tape may even be made of two layers:
- the PVDF-layer (or second layer), which forms a top layer and is aligned to the ambient, acting as blade-surface, and
- the carrier-layer (or first layer) for reinforcement purposes, which comprises the carbon fibers used preferably for heating purposes.

Both alternatives may be preferably connected by a liquid adhesive to the blade.

Pure thermoplastic fluoropolymer like PVDF show a low surface tension and are thus extremely hard. Heat and pressure are used to connect the thermoplastic fluoropolymer material with the carbon fibers preferably.

In a preferred configuration the plastic tape is arranged within the mould to become an integrated part of the blade-surface.

The mould is preferably used within a "Vacuum Assisted Resin Transfer Mould, VARTM"-process. Thus the tape is arranged inside the mould before a matrix material like resin, etc., is applied. The tape is arranged within the mould before the blade is casted or manufactured. This procedure is quite simple and needs nearly no additional time for the working-personnel. Thus its positioning is quite cheap in view to the prior art.

The plastic tape "grinds" or smoothes the surface of the casted blade. Thus less time is needed for finishing-work and repair-work after the blade-casting-process is finished.

The integrated plastic tape especially improves the blade surface in view to the addressed icing-problems:
- the carbon fibers are used to heat the blade via the plastic tape, while
- the resulting blade-surface is quite smooth due to the sandwich structure of the plastic tape and its outer surface.

Thus the "grow up" of ice is reduced or even avoided at locations where the tape is arranged.

The layers of the plastic tape are preferably made by the help of a "rolling system".

For example the first layer or carrier layer comprises a thermoplastic material, shaped as a plastic tape preferably.

The thermoplastic material may be made of PTFE, PVDF, PP or PET.

The thermoplastic material is heated close to its melting point. Next carbon fibers are pressed halfway into the heated thermoplastic material by help of rollers.
Thus the plastic material and the carbon fibers build up the first layer or carrier-layer preferably.

The other half-part of carbon fibers projects from the surface thus this part may be used to be connected with the pure thermoplastic fluoropolymer applied.

It is even possible to use a resin-based system to build up the layered plastic tape, for example a pultrusion-system. The carbon fiber is dipped in resin and is passed through rollers to a template continuously while the resin cures.

It is even possible to attach the plastic tape towards the blade afterwards. After the reinforced plastic tape is made it can be attached to the blade surface using a pressure sensitive adhesive or a traditional adhesive for example. Even various types of "hot melt adhesives" are possible for this purpose.

The plastic tape with the carbon fiber show a higher melting point in comparison to "hot melt adhesives" used. This allows the tape to be heated (externally or by a current being applied to the carbon fiber) without damaging the material until a usable temperature for the adhesive is reached.

The invention is shown in more detail by help of figures.
The figures are only examples of preferred configurations and do not limit the scope of the invention claimed.
- FIG 1: shows a blade surface with a first tape according to the invention and in a cross-sectional view,
- FIG 2: shows a blade surface with a second tape according to the invention and in a cross-sectional view, and
- FIG 3: shows a preferred position of the tape on a wind turbine blade.

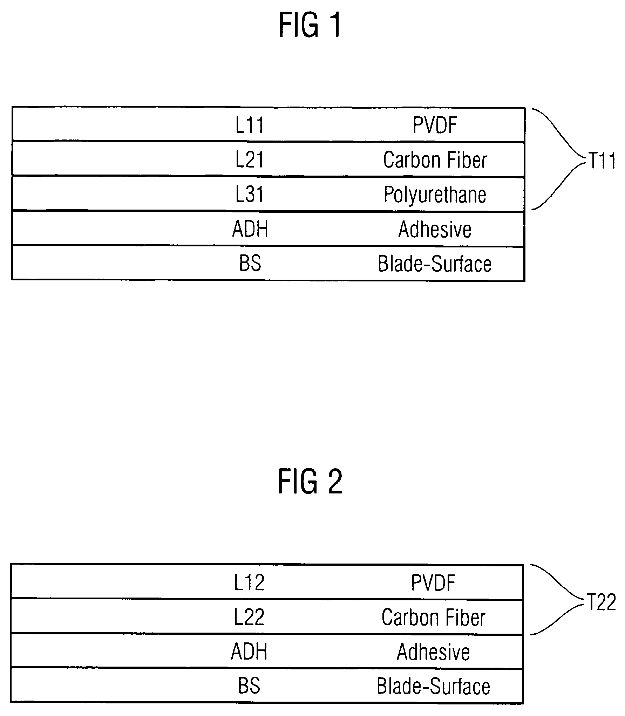

FIG 1 shows a blade surface BS with a first tape T11 according to the invention.

The tape T11 shows a sandwich-structure and comprises three layers L11, L21, L31.

The layer L11 comprises PVDF as described above. Thus the layer L11 is part of a first side of the tape T11.

The layer L11 is connected with a carrier-layer L21. The carrier-layer L21 comprises carbon fibers for reinforcement purposes.

The carrier layer L21 is connected with a layer L31. The layer L31 comprises Polyurethan. Thus the layer L21 is part of a second side of the tape T11, which is opposite to the first side.

The tape T11 is connected with the blade surface BS by an adhesive ADH, which is applied between the tape T11 and the blade surface BS.

FIG 2 shows a blade surface BS with a second tape T22 according to the invention.

The tape T22 comprises only two layers L12 and L22. The top layer L12 comprises PVDF as described above.

The top layer L12 is connected with a carrier-layer L22. The carrier layer L22 comprises carbon fibers for reinforcement purposes.

The tape T22 is connected with the blade surface BS by an adhesive ADH, which is applied between the tape T22 and the blade surface BS.

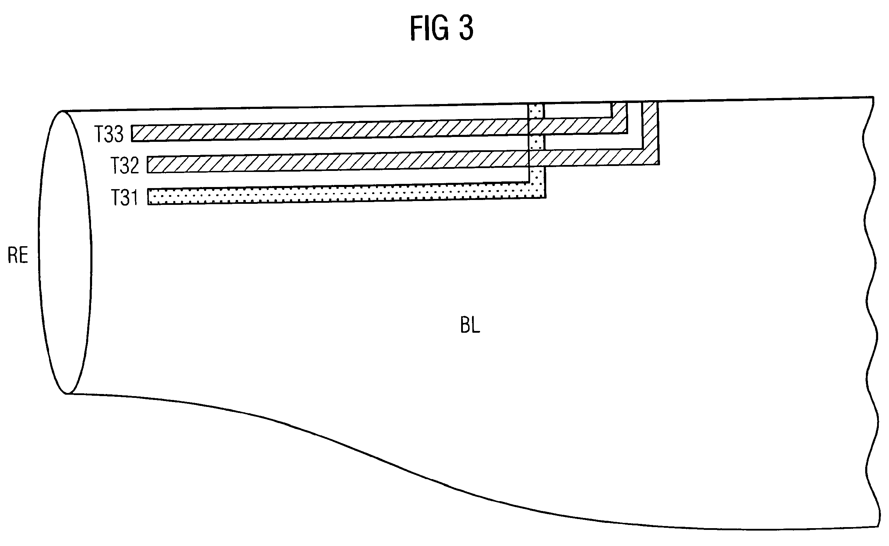

FIG 3 shows a preferred position of tapes invented close to a root-end RE of a blade BL.

The three tapes T31, T32 and T33 show the sandwich-structure according to the invention.

The tapes T31, T32 and T33 are connected with the blade BL and thus are aligned to the ambient of the blade acting as improved blade-surface there.

For best practice the tapes T31, T32 and T33 cross each other at certain points, but they are not connected among each other at those points. Thus the tape T31 is arranged below the tapes T32 and T33 without "short-circuit" with them.

According to the invention the tapes T31, T32 and T33 comprises a layer with carbon fibers each. These carbon-layers are part of an electrical de-icing-system. Electrical current or electrical power is guided and sent through the tapes T31, T32 and T33 via the carbon fibers.

## Claims

1. Method to manufacture an arrangement comprising a wind turbine blade and a plastic tape,
- wherein the plastic tape is arranged at a specific location of the wind turbine blade,
- wherein the plastic tape comprises a sandwich structure with at least two layers,
- wherein the plastic tape comprises a first layer,
- wherein the first layer comprises carbon fibers,
- wherein the carbon-fibers are arranged, positioned and contacted in a way, that electrical power for de-icing purposes is guided by the carbon-fibers,
- wherein the plastic tape comprises on a first side of the tape a second layer, the first side is aligned to the ambient of the wind turbine blade,
- wherein the second layer is connected with the first layer, and
- wherein the second layer comprises a pure thermoplastic fluoropolymer,
the method comprising the following step:
- arranging the plastic tape within a mould to become an integrated part of a surface of the wind turbine blade.

2. Method according to claim 1,
wherein the mould is used within a vacuum assisted resin transfer mould process.

3. Method according to one of the preceding claims,
wherein the plastic tape is arranged inside the mould before a matrix material is applied to cast the wind turbine blade.

4. Method according to one of the preceding claims, wherein the second layer comprises Polyvinylidene Fluoride (PVDF).

5. Method according to one of the preceding claims,
- wherein the plastic tape comprises a third layer arranged on a second side of the tape,
- wherein the third layer is connected with the first layer, and
- wherein the second side of the tape is arranged opposite to the first side of the tape.

6. Method according to claim 5, wherein the third layer of the plastic tape is prepared to be connected with the wind turbine blade.

7. Method according to one of the preceding claims, wherein the first layer of the plastic tape is prepared to be connected with the wind turbine blade.

8. Method according to one of the claims 6 or 7, wherein the connection is established by an adhesive applied.

9. Method according to claim 8, wherein the adhesive is a liquid adhesive.

10. Method according to one of the preceding claims, wherein the first layer and the second layer are connected by applied heat and/or pressure.

11. Method according to one of the preceding claims, wherein the plastic tape is arranged at locations of the wind turbine blade where ambient influence leads to erosion and/or icing there.

12. Method according to claim 11,
- wherein the plastic tape is arranged close to the surface of the leading edge of the wind turbine blade, and/or
- wherein the plastic tape is arranged along the surface of the leading edge of the wind turbine blade.

13. Arrangement comprising a wind turbine blade and a plastic tape,
- wherein the plastic tape is arranged at a specific location of the wind turbine blade,
- wherein the plastic tape comprises a sandwich structure with at least two layers,
- wherein the plastic tape comprises a first layer,
- wherein the first layer comprises carbon fibers,
- wherein the carbon-fibers are arranged, positioned and contacted in a way, that electrical power for de-icing purposes is guided by the carbon-fibers,
- wherein the plastic tape comprises on a first side of the tape a second layer, the first side is aligned to the ambient of the wind turbine blade,
- wherein the second layer is connected with the first layer,
- wherein the second layer comprises a pure thermoplastic fluoropolymer
- wherein the plastic tape comprises a third layer arranged on a second side of the tape,
- wherein the third layer is connected with the first layer,
- wherein the second side of the tape is arranged opposite to the first side of the tape, and
- wherein the third layer comprises polyester or polyurethane.

14. Arrangement according to claim 13,
wherein the third layer of the plastic tape is prepared to be connected with the wind turbine blade.

15. Arrangement according to claim 14,
wherein the connection is established by an adhesive applied, in particular a liquid adhesive.

16. Arrangement according to one of the claims 13 to 15,
wherein the plastic tape is arranged at locations of the wind turbine blade where ambient influence leads to erosion and/or icing there.

17. Arrangement according to one claim 16,
- wherein the plastic tape is arranged close to the surface of the leading edge of the wind turbine blade, and/or
- wherein the plastic tape is arranged along the surface of the leading edge of the wind turbine blade.

## Patentansprüche

1. Verfahren zum Herstellen einer Anordnung, die ein Windturbinenblatt und ein Kunststoffband umfasst,
- wobei das Kunststoffband an einer bestimmten Stelle des Windturbinenblatts angeordnet ist,
- wobei das Kunststoffband eine Schichtstruktur mit mindestens zwei Schichten umfasst,
- wobei das Kunststoffband eine erste Schicht umfasst,
- wobei die erste Schicht Kohlenstofffasern umfasst,
- wobei die Kohlenstofffasern auf eine Weise angeordnet, positioniert und verbunden sind, dass zu Enteisungszwecken elektrischer Strom durch die Kohlenstofffasern geleitet wird,
- wobei das Kunststoffband auf einer ersten Seite, die in ordnungsgemäßer Position zur Umgebung des Windturbinenblatts angeordnet ist, eine zweite Schicht umfasst,
- wobei die zweite Schicht mit der ersten Schicht verbunden ist und
- wobei die zweite Schicht ein reines thermoplastisches Fluorpolymer umfasst,
wobei das Verfahren den folgenden Schritt umfasst:
- Anordnen des Kunststoffbandes in einem Formwerkzeug, damit das Band ein integraler Bestandteil einer Oberfläche des Windturbinenblatts wird.

2. Verfahren nach Anspruch 1,
wobei das Formwerkzeug in einem vakuumunterstützten Harzinjektionsprozess benutzt wird.

3. Verfahren nach einem der vorhergehenden Ansprüche,
wobei das Kunststoffband in dem Formwerkzeug angeordnet wird, bevor zum Gießen des Windturbinenblatts ein Matrixmaterial aufgebracht wird.

4. Verfahren nach einem der vorhergehenden Ansprüche,
wobei die zweite Schicht Polyvinylidenfluorid (PVDF) umfasst.

5. Verfahren nach einem der vorhergehenden Ansprüche,
- wobei das Kunststoffband eine dritte Schicht umfasst, die auf einer zweiten Seite des Bands angeordnet ist,
- wobei die dritte Schicht mit der ersten Schicht verbunden ist und
- wobei die zweite Seite des Bands der ersten Seite des Bands gegenüberliegend angeordnet ist.

6. Verfahren nach Anspruch 5,
wobei die dritte Schicht des Kunststoffbands so aufbereitet ist, dass sie sich mit dem Windturbinenblatt verbinden lässt.

7. Verfahren nach einem der vorhergehenden Ansprüche,
wobei die erste Schicht des Kunststoffbands so aufbereitet ist, dass sie sich mit dem Windturbinenblatt verbinden lässt.

8. Verfahren nach einem der Ansprüche 6 oder 7,
wobei die Verbindung durch einen aufgebrachten Klebstoff hergestellt wird.

9. Verfahren nach Anspruch 8,
wobei es sich bei dem Klebstoff um einen Flüssigklebstoff handelt.

10. Verfahren nach einem der vorhergehenden Ansprüche,
wobei die erste und die zweite Schicht durch aufgebrachte Wärme und/ oder aufgebrachten Druck verbunden werden.

11. Verfahren nach einem der vorhergehenden Ansprüche,
wobei das Kunststoffband an Stellen des Windturbinenblatts angeordnet wird, an denen Umgebungseinflüsse zu Erosion und/ oder Vereisung führen.

12. Verfahren nach Anspruch 11,
- wobei das Kunststoffband nahe an der Oberfläche der vorderen Kante des Windturbinenblatts angeordnet wird und/ oder
- wobei das Kunststoffband an der Oberfläche der vorderen Kante des Windturbinenblatts entlang angeordnet wird.

13. Anordnung, die ein Windturbinenblatt und ein Kunststoffband umfasst,
- wobei das Kunststoffband an einer bestimmten Stelle des Windturbinenblatts angeordnet ist,
- wobei das Kunststoffband eine Schichtstruktur mit mindestens zwei Schichten umfasst,
- wobei das Kunststoffband eine erste Schicht umfasst,
- wobei die erste Schicht Kohlenstofffasern umfasst,
- wobei die Kohlenstofffasern auf eine Weise angeordnet, positioniert und verbunden sind, dass zu Enteisungszwecken elektrischer Strom durch die Kohlenstofffasern geleitet wird,
- wobei das Kunststoffband auf einer ersten Seite, die in ordnungsgemäßer Position zur Umgebung des Windturbinenblatts angeordnet ist, eine zweite Schicht umfasst,
- wobei die zweite Schicht mit der ersten Schicht verbunden ist,
- wobei die zweite Schicht ein reines thermoplastisches Fluorpolymer umfasst,
- wobei das Kunststoffband eine dritte Schicht umfasst, die auf einer zweiten Seite des Bands angeordnet ist,
- wobei die dritte Schicht mit der ersten Schicht verbunden ist,
- wobei die zweite Seite des Bands der ersten Seite des Bands gegenüberliegend angeordnet ist und
- wobei die dritte Schicht Polyester oder Polyurethan umfasst.

14. Anordnung nach Anspruch 13,
wobei die dritte Schicht des Kunststoffbands so aufbereitet ist, dass sie sich mit dem Windturbinenblatt verbinden lässt.

15. Anordnung nach Anspruch 14,
wobei die Verbindung durch einen aufgebrachten Klebstoff, insbesondere einen Flüssigklebstoff, hergestellt ist.

16. Anordnung nach einem der Ansprüche 13 bis 15,
wobei das Kunststoffband an Stellen des Windturbinenblatts angeordnet ist, an denen Umgebungseinflüsse zu Erosion und/ oder Vereisung führen.

17. Anordnung nach Anspruch 16,
- wobei das Kunststoffband nahe an der Oberfläche der vorderen Kante des Windturbinenblatts angeordnet ist und/ oder
- wobei das Kunststoffband an der Oberfläche der vorderen Kante des Windturbinenblatts entlang angeordnet ist.

## Revendications

1. Procédé de fabrication d'un agencement comprenant une pale d'éolienne et un ruban en matière plastique,
- dans lequel le ruban en matière plastique est disposé à un emplacement spécifique de la pale d'éolienne,
- dans lequel le ruban en matière plastique se compose d'une structure en sandwich avec au moins deux couches,
- dans lequel le ruban en matière plastique comprend une première couche,
- dans lequel la première couche comprend des fibres de carbone,
- dans lequel les fibres de carbone sont disposées, positionnées et mises au contact les unes des autres, de telle sorte qu'une énergie électrique fournie à des fins de dégivrage est guidée par les fibres de carbone,
- dans lequel le ruban en matière plastique présente, sur une première face du ruban, une deuxième couche, la première face étant orientée vers le milieu ambiant de la pale d'éolienne,
- dans lequel la deuxième couche est reliée à la première couche, et
- dans lequel la deuxième couche comprend un fluoropolymère thermoplastique pur,
le procédé comprenant l'étape consistant à :
- disposer le ruban en matière plastique à l'intérieur d'un moule pour qu'il devienne une partie intégrante d'une surface de la pale d'éolienne.

2. Procédé selon la revendication 1, dans lequel le moule est utilisé dans le cadre d'un processus de moulage par transfert de résine sous vide.

3. Procédé selon l'une quelconque des revendications précédentes, dans lequel le ruban en matière plastique est disposé à l'intérieur du moule avant qu'un matériau de matrice ne soit appliqué pour couler la pale d'éolienne.

4. Procédé selon l'une quelconque des revendications précédentes, dans lequel la deuxième couche comprend du fluorure de polyvinylidène (PVDF).

5. Procédé selon l'une quelconque des revendications précédentes,
- dans lequel le ruban en matière plastique comprend une troisième couche disposée sur une seconde face du ruban,
- dans lequel la troisième couche est reliée à la première couche, et
- dans lequel la seconde face du ruban est disposée à l'opposé de la première face du ruban.

6. Procédé selon la revendication 5, dans lequel la troisième couche du ruban en matière plastique est préparée pour être reliée à la pale d'éolienne.

7. Procédé selon l'une quelconque des revendications précédentes, dans lequel la première couche du ruban en matière plastique est préparée pour être reliée à la pale d'éolienne.

8. Procédé selon l'une quelconque des revendications 6 ou 7, dans lequel la liaison est établie par application d'un adhésif.

9. Procédé selon la revendication 8, dans lequel l'adhésif est un adhésif liquide.

10. Procédé selon l'une quelconque des revendications précédentes, dans lequel la première couche et la deuxième couche sont reliées par application de chaleur et/ou de pression.

11. Procédé selon l'une quelconque des revendications précédentes, dans lequel le ruban en matière plastique est disposé à des emplacements de la pale d'éolienne où l'influence du milieu ambiant conduit à une érosion et/ou à la formation de givre.

12. Procédé selon la revendication 11,
- dans lequel le ruban en matière plastique est disposé à proximité de la surface du bord d'attaque de la pale d'éolienne, et/ou
- dans lequel le ruban en matière plastique est disposé le long de la surface du bord d'attaque de la pale d'éolienne.

13. Agencement comprenant une pale d'éolienne et un ruban en matière plastique,
- dans lequel le ruban en matière plastique est disposé à un emplacement spécifique de la pale d'éolienne,
- dans lequel le ruban en matière plastique comprend une structure en sandwich avec au moins deux couches,
- dans lequel le ruban en matière plastique comprend une première couche,
- dans lequel la première couche comprend des fibres de carbone,
- dans lequel les fibres de carbone sont disposées, positionnées et mises au contact les unes des autres, de telle sorte qu'une énergie électrique fournie à des fins de dégivrage est guidée par les fibres de carbone,
- dans lequel le ruban en matière plastique présente, sur une première face du ruban, une deuxième couche, la première face étant orientée vers le milieu ambiant de la pale d'éolienne,
- dans lequel la deuxième couche est reliée à la première couche,
- dans lequel la deuxième couche comprend un fluoropolymère thermoplastique pur,
- dans lequel le ruban en matière plastique comprend une troisième couche disposée sur une seconde face du ruban,
- dans lequel la troisième couche est reliée à la première couche,
- dans lequel la seconde face du ruban est disposée à l'opposé de la première face du ruban ; et
- dans lequel la troisième couche comprend du polyester ou du polyuréthane.

14. Agencement selon la revendication 13, dans lequel la troisième couche du ruban en matière plastique est préparée pour être reliée à la pale d'éolienne.

15. Agencement selon la revendication 14, dans lequel la liaison est établie par application d'un adhésif, en particulier d'un adhésif liquide.

16. Agencement selon l'une quelconque des revendications 13 à 15, dans lequel le ruban en matière plastique est disposé à des emplacements de la pale d'éolienne où l'influence du milieu ambiant conduit à une érosion et/ou à la formation de givre.

17. Agencement selon la revendication 16,
- dans lequel le ruban en matière plastique est disposé à proximité de la surface du bord d'attaque de la pale d'éolienne, et/ou
- dans lequel le ruban en matière plastique est disposé le long de la surface du bord d'attaque de la pale d'éolienne.
